# EUROPÄISCHE PATENTSCHRIFT

(11) **EP 0 742 559 B1**
(45) Veröffentlichungstag und Bekanntmachung des Hinweises auf die Patenterteilung: **28.07.1999**
(21) Anmeldenummer: 95107069.7
(22) Anmeldetag: 10.05.1995
(51) Int. Cl.: G11B 33/04

(54) **Kassette zur Aufnahme mindestens einer Scheibe mit darauf gespeicherten oder zu speichernden Informationen hoher Zeichendichte (Compact-Disc)**
Container for holding at least one disc containing recorded information of high density (compact disc)
Boitier pour enmagasiner au moins un disque comportant des informations enregistrées à haute densité (disque compact)

(43) Veröffentlichungstag der Anmeldung: 13.11.1996
(73) Patentinhaber: CARTONNERIES DE THULIN S.A., B-7350 Thulin (BE)
(72) Erfinder: Lammerant, Henri, B-7350 Thulin (BE); Lammerant, Filip, B-7350 Thulin (BE)
(74) Vertreter: Stenger, Watzke & Ring Patentanwälte

(56) Entgegenhaltungen:
- EP-A- 0 114 631
- WO-A-92/22065
- DE-A- 4 210 826
- DE-U- 9 201 879
- DE-U- 9 309 103
- US-A- 5 285 893

## Beschreibung

Die Erfindung betrifft eine Kassette zur Aufnahme mindestens einer Scheibe mit darauf gespeicherten oder zu speichernden Informationen hoher Zeichendichte (Compact-Disc), bestehend aus einem aus einem Basisteil und einem hierzu schwenkbaren Deckelteil zusammengesetzten Gehäuse sowie einer in das Gehäuse einlegbaren, mit Halteelementen für die Scheibe versehenen Platte , wobei das Basisteil einen rechteckigen Boden aufweist, welcher längs seinen einander gegenüberliegenden seitlichen Rändern mit Seitenwänden versehen ist, wobei das Deckelteil eine sich parallel zum Boden erstreckende, rechteckige Deckelwand aufweist, die einen rechteckigen Freiraum zur Aufnahme von Informationsmaterial wie z. B. einen Begleittext nach oben hin begrenzt und längs ihren einander gegenüberliegenden seitlichen Rändern mit Seitenwänden versehen ist, und wobei die im wesentlichen rechteckig gestaltete Platte in jenen beiden Bereichen, in denen bei eingelegter Scheibe deren Umfang den seitlichen Rändern am nächsten kommt, seitliche Erweiterungen aufweist, die zumindest zu einer Seite der Platte hin mit einem Verstärkungsrand versehen sind, der sich entlang der Außenkante der Erweiterung erstreckt.

Eine Kassette mit diesen Merkmalen ist aus der EP 0 515 342 B1 bekannt. Die Kassette eignet sich je nach Art der eingesetzten Platte zur Halterung einer oder zweier Scheiben, wobei im Fall der Halterung zweier Informationsscheiben die Platte beidseitig mit Halterungen in Gestalt federnder Zungen versehen ist. Die Kassette weist international übliche Außenabmessungen auf, so daß sie sich in die hinsichtlich der Hauptabmessungen weitgehend normierten Aufbewahrungsständer einsortieren läßt.

Die in der EP 0 515 342 B1 beschriebene Kassette wird überwiegend zur Aufnahme von Compact-Discs des Audiobereiches verwendet. Zunehmend gewinnt die Compact-Disc jedoch auch Bedeutung als reiner Datenträger für den EDV-Bereich (CD-Rom). Ist es für Compact-Discs im Audiobereich ausreichend, der Kassette ein nur wenige Seiten umfassendes Begleitheft mit Informationen zur Musik und den Interpreten beizufügen, hat es sich für den Einsatz der Compact-Disc als CD-Rom als notwendig herausgestellt, der Compact-Disc unter Umständen umfangreiche Handbücher oder andere begleitende Informationsmaterialien beizufügen. Zur Aufnahme solcher Informationsmaterialien bietet die in der EP 0 515 342 B1 offenbarte Kassette keinen ausreichenden Platz. Bei Einsatz zur Aufnahme mindestens einer CD-Rom wird das entsprechende Handbuch daher nicht in die Kassette eingelegt, sondern dieser lediglich beigefügt, etwa in einer gemeinsamen Kartonbox. Dies hat sich in mehrfacher Hinsicht als unbefriedigend herausgestellt.

Aus der US 5,285,893 ist eine Kassette zur Aufnahme mehrerer Compact-Discs bekannt, deren Abmessungen die international bei CD-Kassetten üblichen Abmessungen deutlich übersteigen. Die Kassette setzt sich aus einem Bodenteil und einem gelenkig hiermit verbundenen Deckelteil zusammen. Das Bodenteil ist unterhalb einer Fläche, an der sich eine Compact-Disc befestigen läßt, mit einem rechteckigen Fach versehen, in welches sich ein Handbuch oder ein Begleittext einschieben läßt. Die Öffnung dieses Faches ist bei geschlossener Kassette durch eine an dem Deckelteil angeformte Wand verschlossen.

Der Erfindung liegt daher die **Aufgabe** zugrunde, eine Kassette zur Aufnahme mindestens einer Informationsscheibe (Compact-Disc) zu schaffen, die sich unter Wahrung der international üblichen Breiten- und Längenmaße zur zusätzlichen Aufnahme eines Handbuches oder anderer begleitender Informationsmaterialien eignet.

Zur **Lösung** wird bei einer Kassette der eingangs genannten Art vorgeschlagen, daß die beiden Verstärkungsränder Stützwände bilden, zwischen die sich das Informationsmaterial einsetzen läßt, und daß sich beide Stützwände so weit nach oben in Richtung auf das Deckelteil erstrecken, daß sie mit ihren oberen Kanten die eingelegte Scheibe überragen und das Informationsmaterial zwischen sich zentrieren.

Eine solche Kassette ermöglicht die zusätzliche Aufnahme eines Handbuches oder eines anderen begleitenden Informationsmaterials mit einer Dicke, welche die Dicke eines üblichen Begleitheftes deutlich übersteigt. In die erfindungsgemäß ausgebildete Kassette können Handbücher mit einer Dicke bis zu 8 mm eingelegt werden, während eine herkömmliche Kassette für den Audiobereich allenfalls Begleithefte mit einer Dicke bis zu 2 mm aufnehmen kann. Da bei der erfindungsgemäßen Kassette der die Platte seitlich begrenzende Verstärkungsrand in der Mitte zu einer Stützwand vergrößert ist, wird eine sichere seitliche Abstützung des eingelegten Handbuches erreicht. Dieses Handbuch kann dieselben Hauptabmessungen, d.h. dieselbe Breite von ca. 120 mm sowie dieselbe Länge von ca. 121 mm, wie die im Audiobereich verwendeten Begleithefte aufweisen. Ferner entsprechen auch die Länge sowie die Breite der Kassette selbst den weltweit üblichen Abmessungen, d.h. jenen Abmessungen, wie sie die weltweit führende "jewel-box" aufweist. Diese Hauptmaße betragen in der Länge 142,2 mm und in der Breite 124,6 mm. Lediglich die Dicke bzw. Höhe der Kassette ist der Dicke des aufzunehmenden Handbuches entsprechend vergrößert, und übersteigt daher das international übliche Maß. Diese Änderung in der Höhe hat jedoch keinen Einfluß auf die Eignung der Kassette, in die üblichen Aufbewahrungsständer eingesetzt zu werden.

Da sowohl das Gehäuse der Kassette als auch die in die Kassette einlegbaren Informationsmaterialien hinsichtlich der beiden Hauptabmessungen den international üblichen Maßen entsprechen, ist die Bestückung der Kassette mit Informationsschreiben sowie Handbüchern auf den vorhandenen Maschinen und Anlagen möglich.

Die an den Erweiterungen der in das Gehäuse einlegbaren Platte ausgebildeten Stützwände führen zu einer Breite der Platte, die nahezu die Gesamtbreite des Gehäuses erreicht. Um eine Kollision der Stützwände mit den Seitenwänden des Gehäuses zu vermeiden, wird bei einer Ausgestaltung der Kassette daher vorgeschlagen, daß die Seitenwände des Basisteils Ausschnitte aufweisen, in die die seitlichen Erweiterungen bei geschlossenem Gehäuse hineinragen. Abhängig von der Materialdicke der Stützwände kann es ferner erforderlich sein, daß die Seitenwände des Deckelteils Ausschnitte aufweisen, in die die seitlichen Erweiterungen sowie die von ihnen getragenen Stützwände bei geschlossenem Gehäuse hineinragen.

Gemäß einer bevorzugten Ausführungsform der Kassette liegt die Seitenwand des Deckelteils außerhalb des überwiegenden Teiles der Seitenwand des Basisteils, und die Innenseite der Stützwand liegt in gleicher Ebene oder einwärts der Innenseite der Seitenwand des Deckelteils und zugleich auswärts der Innenseite der Seitenwand des Basisteils. Durch diese Ausgestaltung wird erreicht, daß die zur seitlichen Abstützung des eingelegten Handbuches verwendete Stützwand soweit als möglich nach außen rückt, um auf diese Weise genügend Innenbreite zum Einlegen der Informationsscheibe sowie des Handbuches zu schaffen.

Die dem Deckelteil zugewandten Ecken der Stützwand können gerundet sein, so daß beim Ergreifen des eingelegten Handbuches Kollisionen mit scharfkantigen Ecken oder Kanten vermieden werden.

Um zu vermeiden, daß sich das eingelegte Handbuch auf der darunter angeordneten Scheibe abstützt, wird ferner vorgeschlagen, daß die Platte mit einem zentral angeordneten Stützelement versehen ist, welches ein Mittelloch der eingelegten Scheibe durchragt und oberhalb der Scheibe eine zentrale Auflage zur Abstützung des zwischen Platte und Deckelwand einlegbaren Handbuches, Informationsheftes etc. bildet. Vorzugsweise sind die Halteelemente für die Scheibe an diesem zentralen Stützelement angeordnet. Bei den Halteelementen kann es sich insbesondere um kranzförmig angeordnete, federnde Zungen handeln.

Eine Entlastung der Scheibe von dem Gewicht des darüber angeordneten Handbuches wird ferner dadurch erreicht, daß die Platte mit hochstehenden seitlichen Abschlußrändern versehen ist, die in etwa in Verlängerung und nach innen parallel versetzt zu der Stützwand verlaufen, und deren Höhe gleich der Höhe der zentralen Auflage ist. Zu demselben Zweck wird ferner vorgeschlagen, daß die Platte im Bereich der sich quer zu den seitlichen Rändern erstrekkenden beiden Querränder mit in Richtung auf die Plattenmitte vorspringenden Kurzrippen versehen ist, deren Höhe gleich der Höhe der zentralen Auflage ist.

In die erfindungsgemäße Kassette lassen sich sowohl solche Platten einsetzen, die zur Aufnahme einer einzigen Scheibe dienen, als auch solche Platten, die an jeder ihrer beiden Seiten die Befestigung jeweils einer Scheibe zulassen. Um beide Scheiben gut erreichen zu können, kann die Platte mittels zweier Gelenkzapfen verschwenkbar in dem Basisteil angeordnet sein, vorzugsweise mit einem Schwenkwinkel von ca. 180°. In diesem Fall erfolgt die Verschwenkbarkeit zwischen Deckelteil und Basisteil einerseits und zwischen Platte und Basisteil andererseits vorzugsweise über Gelenkzapfen, die sich an entgegengesetzten Enden der Seitenwände des Basisteils befinden.

Um einen Diebstahl der Scheibe aus dem geschlossenen Gehäuse zu verhindern, bestehen die die Verschwenkbarkeit zwischen Deckelteil und Basisteil gewährleistenden Gelenkzapfen jeweils aus einem unmittelbar an die Seitenwand des Deckelteils andrehenden Drehzapfen sowie einer sich einstückig daran anschließenden radialen Erweiterung, wobei die Seitenwand des Basisteils mit einer an den Drehzapfen sowie die Erweiterung angepaßten, zweistufigen Bohrung versehen ist, und wobei sich Drehzapfen und Erweiterung vollständig innerhalb der Materialstärke der Seitenwand des Basisteils befinden. Auf diese Weise ist es nicht möglich, die beiden Hälften des Gehäuses durch relatives Verschieben zueinander zu trennen, und dann die darin eingelegte Scheibe zu entnehmen. Vielmehr ist die Kassette ausschließlich in der vorgesehenen Weise durch Aufschwenken zu öffnen.

Um eine auch bei oftmaligem Gebrauch dauerhafte und verschleißarme Abstützung des geöffneten Deckelteiles an dem Basisteil zu erreichen, wird ferner vorgeschlagen, daß die Drehachse zwischen Deckelteil und Basisteil oberhalb der halben Höhe des Gehäuses liegt, und daß sich das Deckelteil bei vollständig geöffneter Kassette mit der gesamten Länge der querverlaufenden Abschlußkante der Deckelwand an der geschlossenen Querwand des Basisteils oberhalb dessen Bodens abstützt.

Ferner wird vorgeschlagen, daß die Deckelwand des Deckelteils an ihrem der Drehachse zwischen Deckelteil und Basisteil zugewandten Rand in eine schräg angeschnittenen Abschlußkante ausläuft, und daß die Schräge der Abschlußkante bei geschlossener Kassette mit ganzer Länge auf einem gerundeten oder mit einer Fase versehenen Übergang aufliegt der an einer langgestreckten Griffleiste der Platte angeordnet ist, wobei an dem Übergang die im wesentlichen in Verlängerung der Deckelwand angeordnete Griffleiste in einen langgestreckten Verbindungsabschnitt übergeht, der die Griffleiste mit der Platte verbindet. Auf diese Weise wird die Festigkeit und Stabilität der Kassette insgesamt erhöht. Insbesondere wird verhindert, daß sich die Deckelwand im Bereich der Abschlußkante nach innen hin eindrücken läßt.

Schließlich wird vorgeschlagen, daß mindestens vier Hauptkanten des Gehäuses mit Viertelkreis-Rundungen versehen sind. Das so gestaltete Gehäuse weist eine besonders weiche, handsympatische Form auf.

Weitere Einzelheiten und Vorteile des Gegenstandes der Erfindung werden nachfolgend anhand der zugehörigen Zeichnungen erläutert. Darin zeigen:
- Fig. 1a: in einer Schnittdarstellung eine leere Kassette, bestehend aus einem Basisteil, einem Deckelteil sowie einer dazwischen angeordneten Platte;
- Fig. 1b: die in Fig. 1a dargestellte Kassette mit zwei auf die Platte aufgesetzten Informationsscheiben sowie einem in die Kassette eingelegten Handbuch;
- Fig. 2: in einer Schnittdarstellung eine Kassette mit Basisteil und Deckelteil wie bei Fig. 1a, jedoch einer dazwischen eingesetzten Platte für nur eine Informationsscheibe;
- Fig. 3: eine Seitenansicht der Kassette gemäß Fig. 1a in aufgeklapptem Zustand;
- Fig. 4: einen Schnitt durch die in aufgeklapptem Zustand dargestellte Kassette gemäß Fig. 3;
- Fig. 5: eine Draufsicht auf die mit Halteelementen für die beidseitige Befestigung je einer Informationsscheibe versehene Platte;
- Fig. 6: eine Seitenansicht der Platte gemäß Fig. 5;
- Fig. 7: eine Schnittdarstellung durch die Platte gemäß Fig. 5;
- Fig. 8: einen stark vergrößerten Schnitt entlang der Linie VIII-VIII der Fig. 6 bei aufgesetzter Informationsscheibe;
- Fig. 9: in einer Ansicht eine Detaildarstellung der in Fig. 3 mit IX bezeichneten, gelenkigen Verbindung zwischen Basisteil und Deckelteil;
- Fig. 10: eine der Ansicht gemäß Fig. 9 entsprechende Schnittdarstellung und
- Fig. 11: einen vergrößerten Schnitt durch die in Fig. 3 mit Xl bezeichnete, gelenkige Verbindung zwischen Basisteil und Platte.

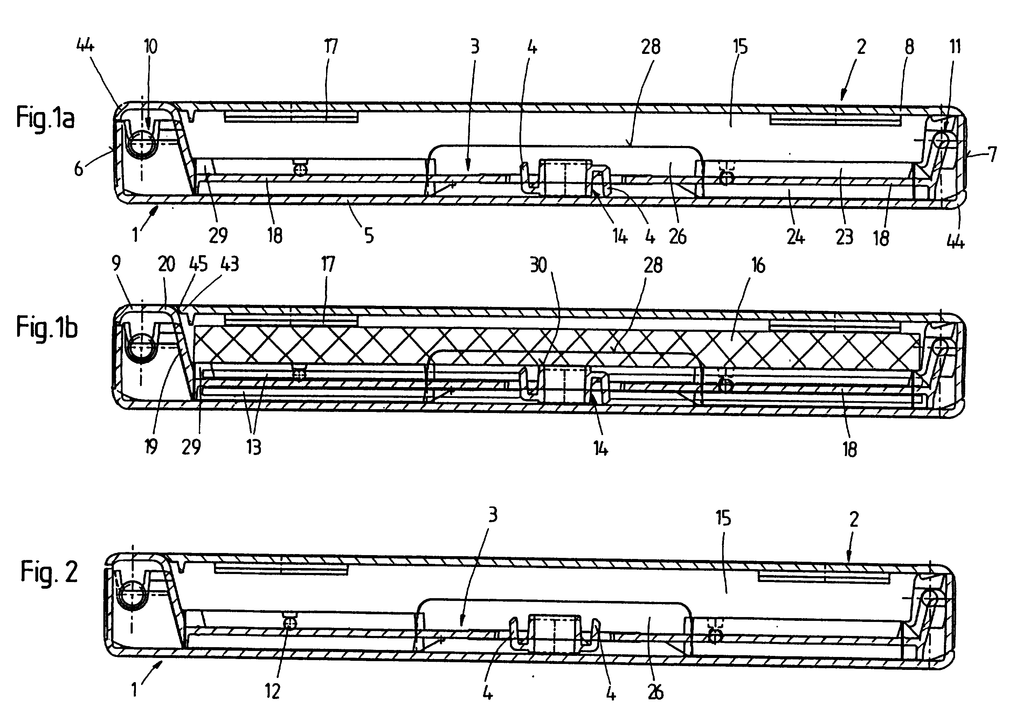

Die in den Figuren 1a und 1b dargestellte Kassette besteht aus einem aus Basisteil 1 und Deckelteil 2 zusammengesetzten Gehäuse sowie einer in das Gehäuse eingesetzten Platte 3. Die Kassette weist folgende Abmessungen auf: Länge 141 bis 143 mm; Breite 124 bis 125,5 mm; Höhe bzw. Dicke 16 bis 20mm, vorzugsweise 17,3 mm. An der Platte 3 sind zu beiden Seiten der Platte 3 hin Halteelemente 4 in Gestalt federnder Zungen angeordnet. Diese Halteelemente 4 können in das Mittelloch einer informationspeichernden Scheibe, d.h. einer sogenannten Compact-Disc, eingreifen. Da die Halteelemente 4 zu beiden Seiten der Platte 3 ragen, kann auf jeder Seite der Platte 3 jeweils eine Scheibe befestigt werden.

Das Basisteil 1 besteht aus einem rechteckigen Boden 5 sowie den Boden rundum umgebenden Wänden, von denen in Fig. 1a die geschlossenen Querwände 6,7 erkennbar sind. Das Deckelteil 2 verfügt über eine ebenfalls rechteckige Deckelwand 8, die das Gehäuse nach oben hin abschließt. Die Deckelwand 8 ist kürzer als der Boden 5, wobei der insofern verbleibende Streifen durch eine an der Platte 3 angeformte Griffleiste 9 verschlossen wird. Griffleiste 9 und Deckelwand 8 liegen in einer Ebene, und definieren daher gemeinsam die Oberseite des Gehäuses. Das Deckelteil 2 verfügt nur über sehr schmale Querwände, der Abschluß des Gehäuses in Längsrichtung erfolgt überwiegend durch die an dem Basisteil 1 ausgeformten Querwände 6,7.

Die Kassette ist mit insgesamt zwei Scharniereinrichtungen versehen, die jeweils aus fest angeformten Gelenkzapfen bestehen. Ein erstes Paar Gelenkzapfen 10 verbindet das Deckelteil 2 schwenkbar mit dem Basisteil 1. Ein zweites Paar Gelenkzapfen 11 verbindet die Platte 3 schwenkbar mit dem Basisteil 1. Hierbei liegen die Gelenkzapfen 10 im Bereich des einen Endes, und die Gelenkzapfen 11 im Bereich des anderen Endes des Basisteils 1.

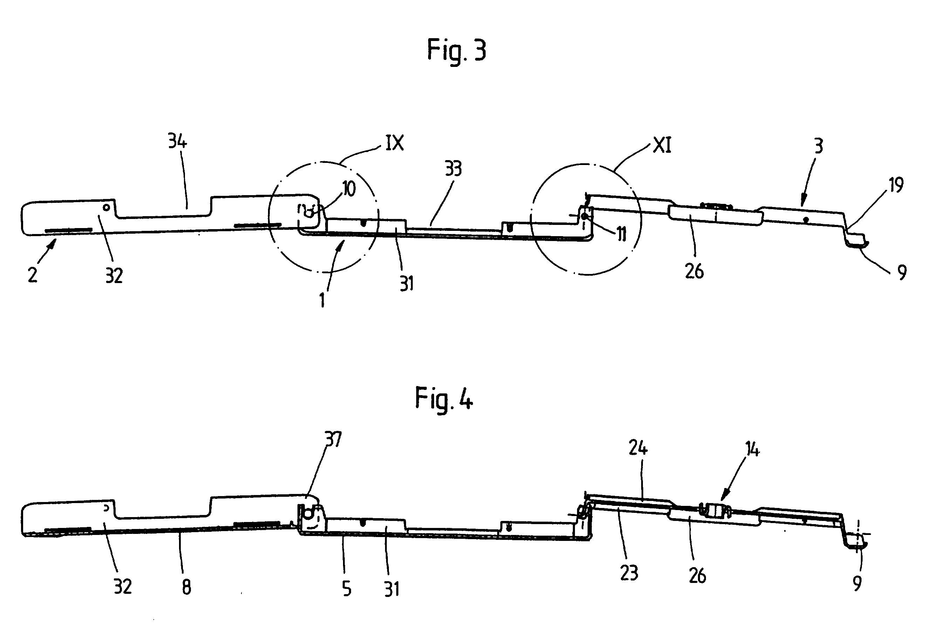

Wird zunächst das Deckelteil 2 um die Gelenkzapfen 10 vollständig aufgeschwenkt, und anschließend die Platte 3 um die Gelenkzapfen 11 vollständig aufgeschwenkt, ergibt sich die in den Figuren 3 und 4 dargestellte Zuordnung von Basisteil 1, Deckelteil 2 und Platte 3. In dieser Stellung weist die Rückseite der Platte 3 nach oben, so daß sowohl die auf der Rückseite, als auch die auf der Vorderseite der Platte 3 angeordnete Scheibe entnommen oder aufgesetzt werden kann. Befindet sich hingegen die Platte 3 in ihrer eingeschwenkten Stellung innerhalb des Basisteils 1, kann nur die auf der Vorderseite der Platte 3 befestigte Scheibe entnommen werden.

Eine alternative Ausführungsform der Kassette ist in Fig. 2 dargestellt. Hierbei sind Basisteil 1 und Deckelteil 2 identisch zu der vorangehend beschriebenen Ausführungsform. Hingegen ist die Platte 3 mit Halteelementen 4 in Gestalt federnder Zungen nur auf ihrer einen, nach oben weisenden Seite versehen, so daß sich auch nur auf der Oberseite eine Scheibe bzw. Compact-Disc befestigen läßt. Da die Platte 3 bei dieser Ausführungsform nicht schwenkbar sein muß, wird sie mittels Rastelementen 12 innerhalb des Basisteiles 1 fest eingerastet. Die Rastelemente 12 sind auch in Verbindung mit den Figuren 1a und 1b dargestellt; sie haben hier jedoch keine Funktion.

Fig. 1b zeigt die Kassette gemäß Fig. 1a, wenn diese auf beiden Seiten der Platte 3 mit Scheiben 13 bestückt ist. Die Scheiben 13 sind in üblicher Weise mit Mittellöchern versehen, an denen die federnden Zungen der Halteelemente 4 anliegen, und auf diese Weise die Scheiben 13 an der Platte 3 fixieren. Die Halteelemente 4 gruppieren sich um ein zentrales Stützelement 14, welches an der Platte 3 angeformt ist. Bei der Ausführung für insgesamt zwei Scheiben 13 ragen die federnden Zungen der Halteelemente 4 abwechselnd nach oben und unten, d.h. auf eine nach oben ragende, federnde Zunge für die obere Scheibe 13 folgt eine nach unten ragende federnde Zunge für die untere Scheibe, usw. Zu beiden Seiten der Platte 3 hin ergibt sich somit ein Kranz der in Gestalt von federnden Zungen ausgebildeten Halteelemente 4.

Zwischen der auf dem Boden 5 aufliegenden Platte und der Deckelwand 8 verbleibt ein relativ großer, rechteckiger Freiraum 15. In diesen Freiraum 15 lassen sich Informationsmaterialien 16, wie z. B. ein Handbuch oder ein ausführlicher Begleittext von 5 bis 8 mm Dicke einlegen. Das Informationsmaterial 16 läßt sich erst dann der Kassette entnehmen, wenn zuvor das Deckelteil 2 aufgeschwenkt wird. Erst nach Entnahme des Informationsmaterials 16 kann dann auch die obere Scheibe 13 und, nach dem Ausschwenken der Platte 3 aus dem Basisteil 1, auch die untere Scheibe 13 gegriffen werden. Fig. 1b läßt erkennen, daß das Deckelteil 2 mit insgesamt vier Haltelaschen 17 versehen ist, die sich parallel und geringfügig unterhalb der Deckelwand 8 erstrecken.

Zwischen Haltelaschen 17 und Deckelwand 8 läßt sich ein Deckblatt oder Faltblatt einschieben, dessen Dicke jedoch nicht mehr als 0,5 mm beträgt. Das Deckblatt befindet sich damit unmittelbar unterhalb der transparenten Deckelwand 8, und kann dem Benutzer Auskunft über den Inhalt der Kassette geben. Das Deckblatt ist jedoch nicht unbedingt erforderlich, da wegen der transparenten Deckelwand 8 etwaige Produktinformationen auch unmittelbar von dem Titelblatt des Handbuches 16 abgelesen werden können.

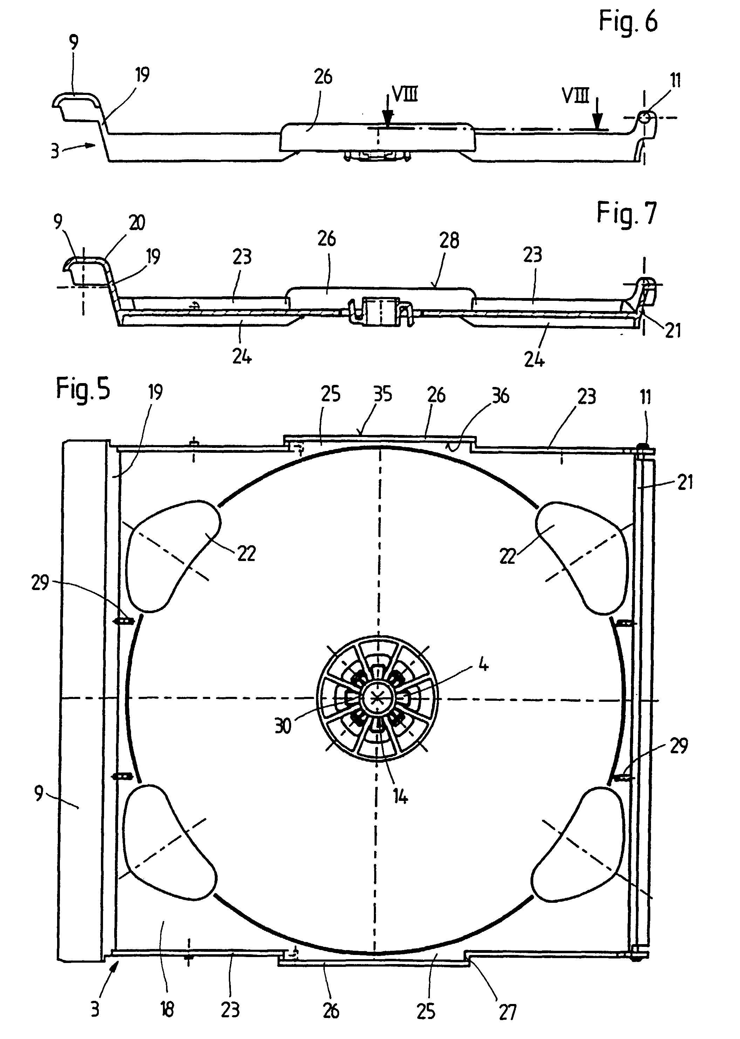

Einzelheiten der Platte 3 werden nachfolgend anhand der Figuren 5 bis 7 erläutert. Diese besteht aus einer im wesentlichen rechteckigen Tafel 18, an der querverlaufend und etwas erhöht die Griffleiste 9 angeformt ist. An der Griffleiste 9 läßt sich die Platte 3 ergreifen, um diese aus dem Basisteil herauszuschwenken. Über einen geneigt zur Plattenoberfläche angeordneten Verbindungsabschnitt 19 ist die sich über die gesamte Breite der Platte 3 erstrekkende Griffleiste 9 mit der Tafel 18 verbunden. Der Übergang 20 zwischen der Griffleiste 9 und dem Verbindungsabschnitt 19 ist leicht gerundet. Griffleiste 9 und Verbindungsabschnitt 19 erstrecken sich über die gesamte Breite der Platte 3. Am gegenüberliegenden Querrand ist eine leicht nach außen geneigte Versteifungsrippe 21 angeformt, an deren Enden sich die Gelenkzapfen 11 befinden. Vier Grifflöcher 22 ermöglichen es, die diese Grifflöcher teilweise überdeckenden Scheiben zu ergreifen.

Auch entlang der Seitenränder weist die Platte 3 verschiedene Versteifungsrippen auf. Über ca. ein Drittel der Länge der Platte 3, ausgehend von dem Verbindungsabschnitt 19 bzw. der Versteifungsrippe 21, sind die Kanten der Platte 3 mit einem hochstehenden Abschlußrand 23 versehen. Über dieselbe Länge erstreckt sich auch auf der Unterseite der Platte ein Abschlußrand 24, der der Auflage der Platte 3 auf dem Boden des Basisteils dient. Der nach unten weisende Abschlußrand 24 verhindert ferner, daß sich die Platte 3 nach unten durchbiegt.

Sowohl der hochstehende Abschlußrand 23 als auch der nach unten weisende Abschlußrand 24 erstrecken sich nicht durchgehend über die gesamte Länge der Platte, sondern reichen nur bis zu einem Mittelbereich, der sich etwa über ein Drittel der Länge der Platte 3 erstreckt. Dieser Mittelbereich zeichnet sich dadurch aus, daß in diesem Bereich bei eingelegter Scheibe deren Umfang den seitlichen Rändern der Platte 3 am nächsten kommt. Die Tafel 18 der Platte 3 weicht hier von der exakten Rechteckform ab, und ist an beiden seitlichen Rändern mit schmalen, rechteckigen Erweiterungen 25 versehen, die exakt in der Ebene der Tafel 18 liegen. Die nach außen weisende Längskante jeder Erweiterung 25 ist mit einer Stützwand 26 versehen, die nach oben in Richtung auf das Deckelteil der Kassette ragt. Die Stützwand 26 ist über kurze Verbindungsränder 27, die entlang der Schmalseiten der Erweiterung 25 verlaufen, mit dem parallel, jedoch versetzt zu der Stützwand 26 laufenden Abschlußrand 23 verbunden. Verbindungsrand 27 und hochstehender Abschlußrand 23 weisen dieselbe Höhe auf. Hingegen ist, was die Figuren 6 und 7 gut erkennen lassen, die Stützwand 26 deutlich höher gestaltet als die sich an beiden Enden anschließenden Abschlußränder 23. Wird eine Informationsscheibe in der vorgesehenen Weise auf der Oberseite der Platte 3 befestigt, so wird auch diese Scheibe noch deutlich durch die obere Kante 28 der Stützwand 26 überragt.

Im Bereich beider querverlaufender Ränder ist die Platte 3 mit in Richtung auf die Plattenmitte vorspringenden Kurzrippen 29 versehen, deren Höhe gleich der Höhe der hochstehenden Abschlußränder 23 ist. Schließlich weist auch das zentral in der Platte 3 angeordnete Stützelement 14 eine zentrale Auflage 30 auf, deren Höhe der Höhe der hochstehenden Abschlußränder 23 entspricht. Insgesamt weisen daher die hochstehenden Abschlußränder 23, die Verbindungsränder 27, die Kurzrippen 29 sowie die zentrale Auflage 30 dieselbe Höhe über der Tafel 18 auf, so daß sich unter Verwendung dieser Einzelteile eine Abstützung mit mehreren Abstützpunkten für das Informationsmaterial 16 ergibt. Insbesondere die Fig. 1b läßt erkennen, wie sich das Informationsmaterial 16 zugleich auf der zentralen Auflage 30 sowie auf den Kurzrippen 29 abstützt. Die genannten Abstützpunkte liegen allesamt höher als die Oberseite der auf der Platte 3 befestigten Scheibe 13. Eine Berührung der empfindlichen Scheibe 13 durch das oberhalb angeordnete Informationsmaterial 16 wird daher weitgehend vermieden.

Die Fixierung des auf die dargestellte Weise abgestützten Informationsmaterials 16 erfolgt in Längsrichtung durch den Verbindungsabschnitt 19 sowie die Versteifungsrippe 21. In seitlicher Richtung wird das Informationsmaterial 16 ausschließlich durch die auf beiden seitlichen Rändern angeordneten Stützwände 26 fixiert. Deren Höhe ist zu diesem Zweck so gewählt, daß ihre obere Kante 28 etwa bis zur halben Dicke des Informationsmaterials 16 reicht. Hierbei wird davon ausgegangen, daß die Dicke des Informationsmaterials 16 5 bis 8 mm beträgt. Die Distanz zwischen den beiden Stützwänden 26 übersteigt geringfügig die Breite des Informationsmaterials. Hingegen ist die Distanz zwischen zwei einander gegenüberliegenden hochstehenden Abschlußrändern 23 geringer als die Breite des Informationsmaterials 16. Auf diese Weise ist gewährleistet, daß das Informationsmaterial 16 zwar seitlich durch die Stützwände 26 zentriert wird, zugleich jedoch auf der gesamten Länge der hochstehenden Abschlußränder 23 aufliegt und so von unten gestützt wird.

In den Figuren 3 und 4 ist dargestellt, daß Basisteil 1 und Deckelteil 2 jeweils Seitenwände 31,32 aufweisen. Diese Seitenwände 31,32 erstrecken sich nicht gleichförmig über die gesamte Länge, sondern weisen Ausschnitte 33,34 auf. Die Größe der Ausschnitte 33,34 ist so bemessen, daß die Stützwände 26 bündig in die Ausschnitte 33,34 hineinpassen. Die Außenseite 35 der Stützwände 26 schließt hierbei mit der Außenseite des Gehäuses bündig ab.

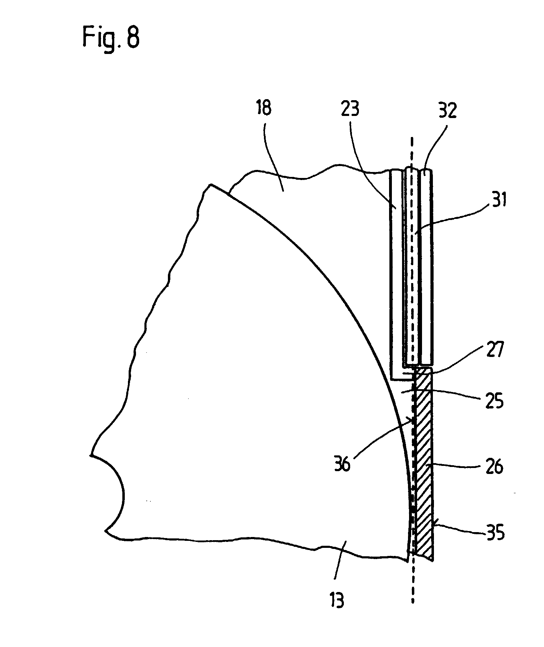

Die Seitenwände 31,32 des Basisteils 1 sowie des Deckelteils 2 überdecken sich in geschlossenem Zustand des Gehäuses teilweise, wobei die Seitenwände 32 des Deckelteils 2 außen liegen. Hierdurch ergibt sich im Bereich der Erweiterung 25 die in Fig. 8 dargestellte geometrische Zuordnung der überhöhten Stützwand 26 zu dem hochstehenden Abschlußrand 23 der Platte 3, der Seitenwand 31 des Basisteils 1 und der Seitenwand 32 des Deckelteils 2. Um zu vermeiden, daß beim Schließen des Deckelteils 2 dessen Seitenwand 32 mit dem zwischen den Stützwänden 26 liegenden Informationsmaterial 16 kollidiert, befindet sich die das Informationsmaterial 16 zentrierende Innenseite 36 der Stützwand 26 in gleicher Ebene oder einwärts der Innenseite der Seitenwand 32 des Deckelteils 2, und zugleich auswärts der Innenseite der Seitenwand 31 des Basisteils 1. Zur Orientierung ist in Fig. 8 der Umriß des eingelegten Informationsmaterials 16 gestrichelt dargestellt.

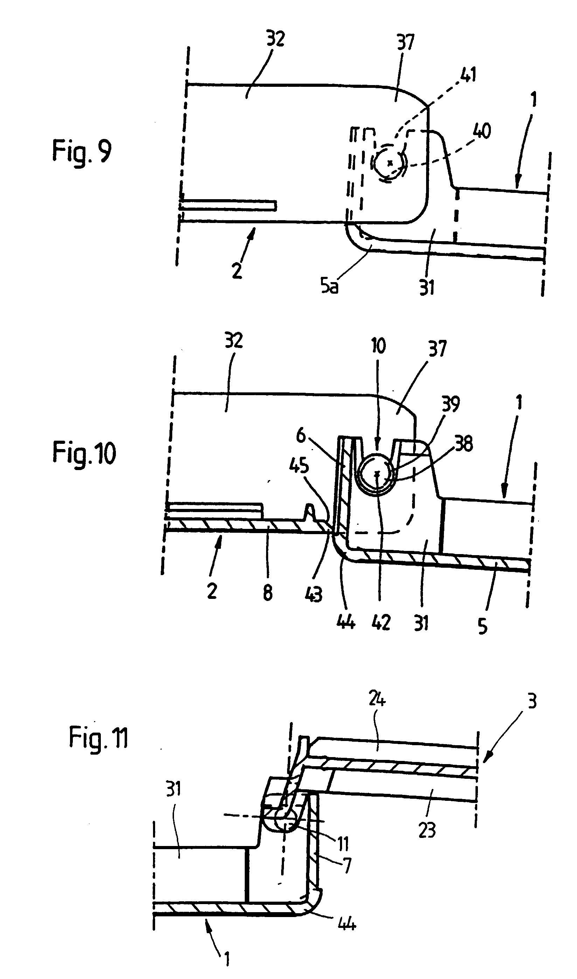

Einzelheiten der gelenkigen Verbindung zwischen Deckelteil 2 und Basisteil 1 sind in den Figuren 9 und 10 dargestellt. Die Gelenkzapfen 10 sind an der Innenseite von freien Schenkeln 37 befestigt, die Verlängerungen der Seitenwand 32 sind. Jeder Gelenkzapfen 10 besteht aus einem kurzen zylindrischen Drehzapfen 38 sowie einer sich einstückig daran anschließenden radialen Erweiterung 39. Drehzapfen 38 sowie radiale Erweiterung 39 werden von einer zweistufigen Bohrung 40 in den Seitenwänden 31 des Basisteils 1 aufgenommen. Drehzapfen 38 und radiale Erweiterung 39 sind so schmal geformt, daß sich beide Teile vollständig innerhalb der Materialstärke der Seitenwand 31 befinden. Die radiale Erweiterung 39 verhindert, daß das Deckelteil 2 durch seitliches Aufbiegen der Schenkel 37 von dem Basisteil 1 getrennt werden kann. Zur Einführung des Gelenkzapfens 11 in die zweistufige Bohrung 40 ist die zweistufige Bohrung 40 mit einem schlüssellochförmigen Einführschlitz 41 versehen.

Die Drehachse 42 des Gelenkzapfens 11 befindet sich deutlich oberhalb der halben Höhe des Gehäuses. Dies führt dazu, daß bei vollständig geöffnetem Deckelteil 2 dieses nicht in derselben Ebene wie das Basisteil 1 liegt, sondern etwas erhöht. Zur Begrenzung des Schwenkweges auf ca. 180° liegt in vollständig geöffnetem Zustand eine quer verlaufende Abschlußkante 43 der Deckelwand 8 an der geschlossenen Querwand 6 des Basisteils 1 oberhalb dessen Bodens 5 an. Hierdurch ergibt sich eine linienförmige und sehr verschleißarme Abstützung des vollständig aufgeschwenkten Deckelteils 2 an der Querwand 6 des Basisteils 1. Diese Abstützung erfolgt oberhalb einer Viertelkreis-Rundung 44 zwischen Querwand 6 und Boden 5. Ähnliche Viertelkreis-Rundungen finden sich auch an den übrigen drei Hauptkanten des Gehäuses. Zusätzlich zu der Abstützung durch die Abschlußkante 43 stützt sich die Seitenwand 32 des Deckelteils 2 in geöffnetem Zustand auf einer in Verlängerung des Bodens 5, aber außerhalb der Seitenwand 32 angeordneten Außenrippe 5a ab.

Für die Funktion der Kassette hat die Abschlußkante 43 noch eine zusätzliche Bedeutung. Die Abschlußkante 43 ist, wie z.B. Fig. 1a erkennen läßt, mit einer Schräge 45 versehen. Bei geschlossener Kassette legt sich die Schräge 45 der Abschlußkante 43 auf ganzer Länge auf den gerundeten Übergang 20, der die Griffleiste 9 der Platte 3 mit dem Verbindungsabschnitt 19 der Platte 3 verbindet. Durch das Aufliegen der Schräge 45 auf dem Übergang 20 wird der Deckelwand 8 in diesem Bereich eine erhöhte Stabilität verliehen. Die Kassette läßt sich an dieser Stelle nicht durch Druck auf die Deckelwand 8 verformen.

### Bezugszeichenliste

- 1: Basisteil
- 2: Deckelteil
- 3: Platte
- 4: Halteelemente
- 5: Boden
- 5a: Außenrippe
- 6: Querwand des Basisteils
- 7: Querwand des Basisteils
- 8: Deckelwand
- 9: Griffleiste
- 10: Gelenkzapfen
- 11: Gelenkzapfen
- 12: Rastelement
- 13: Scheibe, Compact-Disc
- 14: Stützelement
- 15: Freiraum
- 16: Informationsmaterialien, Handbuch
- 17: Haltelasche
- 18: Tafel
- 19: Verbindungsabschnitt
- 20: Übergang
- 21: Versteifungsrippe
- 22: Griffloch
- 23: hochstehender Abschlußrand
- 24: nach unten ragender Abschlußrand
- 25: Erweiterung
- 26: Stützwand
- 27: Verbindungsrand
- 28: obere Kante
- 29: Kurzrippe
- 30: zentrale Auflage
- 31: Seitenwand des Basisteils
- 32: Seitenwand des Deckelteils
- 33: Ausschnitt im Basisteil
- 34: Ausschnitt im Deckelteil
- 35: Außenseite der Stützwand
- 36: Innenseite der Stützwand
- 37: Schenkel
- 38: Drehzapfen
- 39: radiale Erweiterung
- 40: zweistufige Bohrung
- 41: Einführschlitz
- 42: Drehachse
- 43: Abschlußkante
- 44: Viertelkreis-Rundung
- 45: Schräge

## Patentansprüche

1. Kassette zur Aufnahme mindestens einer Scheibe mit darauf gespeicherten oder zu speichernden Informationen hoher Zeichendichte (Compact-Disc),
bestehend aus einem, aus einem Basisteil (1) und einem hierzu schwenkbaren Deckelteil (2), zusammengesetzten Gehäuse sowie einer in das Gehäuse einlegbaren, mit Halteelementen (4) für die Scheibe (13) versehenen Platte (3),
wobei das Basisteil (1) einen rechteckigen Boden (5) aufweist, welcher längs seinen einander gegenüberliegenden seitlichen Rändern mit Seitenwänden (31) versehen ist,
wobei das Deckelteil (2) eine sich parallel zum Boden (5) erstreckende, rechteckige Deckelwand (8) aufweist, die einen rechteckigen Freiraum (15) zur Aufnahme von Informationsmaterial (16) wie z. B. einen Begleittext nach oben hin begrenzt und längs ihren einander gegenüberliegenden seitlichen Rändern mit Seitenwänden (32) versehen ist,
und wobei die im wesentlichen rechteckig gestaltete Platte (3) in jenen beiden Bereichen, in denen bei eingelegter Scheibe (13) deren Umfang den seitlichen Rändern am nächsten kommt, seitliche Erweiterungen (25) aufweist, die zumindest zu einer Seite der Platte (3) hin mit einem Verstärkungsrand versehen sind, der sich entlang der Außenkante der Erweiterung (25) erstreckt,
**dadurch gekennzeichnet,**
daß die beiden Verstärkungsränder Stützwände (26) bilden, zwischen die sich das Informationsmaterial (16) einsetzen läßt, und daß sich beide Stützwände (26) so weit nach oben in Richtung auf das Deckelteil (2) erstrecken, daß sie mit ihren oberen Kanten (28) die eingelegte Scheibe (13) überragen und das Informationsmaterial (16) zwischen sich zentrieren.

2. Kassette nach Anspruch 1, dadurch gekennzeichnet, daß die Seitenwände (31) des Basisteils (1) Ausschnitte (33) aufweisen, in die die seitlichen Erweiterungen (25) bei geschlossenem Gehäuse hineinragen.

3. Kassette nach Anspruch 1 oder Anspruch 2, dadurch gekennzeichnet, daß die Seitenwände (32) des Deckelteils (2) Ausschnitte (34) aufweisen, in die die seitlichen Erweiterungen (25) sowie die von ihnen getragenen Stützwände (26) bei geschlossenem Gehäuse hineinragen.

4. Kassette nach einem der vorangehenden Ansprüche, dadurch gekennzeichnet, daß die Seitenwand (32) des Deckelteils (2) außerhalb des überwiegenden Teiles der Seitenwand (31) des Basisteils (1) liegt, und daß die Innenseite (36) der Stützwand (26) in gleicher Ebene oder einwärts der Innenseite der Seitenwand (32) des Deckelteils (2) und zugleich auswärts der Innenseite der Seitenwand (31) des Basisteils (1) liegt.

5. Kassette nach einem der vorangehenden Ansprüche, dadurch gekennzeichnet, daß die Außenseite (35) der Stützwand (26) bündig mit der Seitenwand des Gehäuses abschließt.

6. Kassette nach einem der vorangehenden Ansprüche, dadurch gekennzeichnet, daß die dem Deckelteil (2) zugewandten Ecken der Stützwand (26) gerundet sind.

7. Kassette nach einem der vorangehenden Ansprüche, dadurch gekennzeichnet, daß die Platte (3) mit einem zentral angeordneten Stützelement (14) versehen ist, welches ein Mittelloch der eingelegten Scheibe (13) durchragt und oberhalb der Scheibe (13) eine zentrale Auflage (30) zur Abstützung eines zwischen Platte (13) und Deckelwand (8) einlegbaren Handbuches (16), Informationsheftes etc. bildet.

8. Kassette nach Anspruch 7, dadurch gekennzeichnet, daß die Halteelemente (4) für die Scheibe (13) an dem zentralen Stützelement (14) angeordnet sind.

9. Kassette nach Anspruch 8, dadurch gekennzeichnet, daß die Halteelemente (4) kranzförmig angeordnete, federnde Zungen sind.

10. Kassette nach einem der Ansprüche 7 bis 9, dadurch gekennzeichnet, daß die Platte (3) mit hochstehenden seitlichen Abschlußrändern (23) versehen ist, die in etwa in Verlängerung und nach innen parallel versetzt zu der Stützwand (26) verlaufen, und deren Höhe gleich der Höhe der zentralen Auflage (30) ist.

11. Kassette nach einem der Ansprüche 7 bis 10, dadurch gekennzeichnet, daß die Platte (3) im Bereich der sich quer zu den seitlichen Rändern erstreckenden beiden Querränder mit in Richtung auf die Plattenmitte vorspringenden Kurzrippen (29) versehen ist, deren Höhe gleich der Höhe der zentralen Auflage (30) ist.

12. Kassette nach einem der vorangehenden Ansprüche, dadurch gekennzeichnet, daß sich Halteelemente (4) auf beiden Seiten der Platte (3) zur Aufnahme je einer Scheibe (13) auf jeder Seite der Platte (3) befinden.

13. Kassette nach Anspruch 12, dadurch gekennzeichnet, daß die Platte (3) mittels zweier Gelenkzapfen (11) verschwenkbar in dem Basisteil (1) angeordnet ist, vorzugsweise mit einem Schwenkwinkel von ca. 180°.

14. Kassette nach Anspruch 13, dadurch gekennzeichnet, daß die Verschwenkbarkeit zwischen Deckelteil (2) und Basisteil (1) einerseits und zwischen Platte (3) und Basisteil (1) andererseits über Gelenkzapfen (10) bzw. (11) erfolgt, die sich an entgegengesetzten Enden der Seitenwände (31) des Basisteils (1) befinden.

15. Kassette nach einem der vorangehenden Ansprüche, dadurch gekennzeichnet, daß die die Verschwenkbarkeit zwischen Deckelteil (2) und Basisteil (1) gewährleistenden Gelenkzapfen (10) jeweils aus einem unmittelbar an die Seitenwand (32) des Deckelteils (2) angrenzenden Drehzapfen (38) sowie einer sich einstückig daran anschließenden radialen Erweiterung (39) bestehen, wobei die Seitenwand (31) des Basisteils (1) mit einer an den Drehzapfen (38) sowie die Erweiterung (39) angepaßten, zweistufigen Bohrung (40) versehen ist, und wobei sich Drehzapfen (38) und Erweiterung (39) vollständig innerhalb der Materialstärke der Seitenwand (31) des Basisteils befinden.

16. Kassette nach einem der vorangehenden Ansprüche, dadurch gekennzeichnet, daß die Drehachse (42) zwischen Deckelteil (2) und Basisteil (1) oberhalb der halben Höhe des Gehäuses liegt, und daß sich das Deckelteil (2) bei vollständig geöffneter Kassette mit der querverlaufenden Abschlußkante (43) der Deckelwand (8) an der geschlossenen Querwand (6) des Basisteils (1) oberhalb dessen Bodens (5) abstützt.

17. Kassette nach einem der vorangehenden Ansprüche, dadurch gekennzeichnet, daß die Deckelwand (8) des Deckelteils (2) an ihrem der Drehachse (42) zwischen Deckelteil (2) und Basisteil (1) zugewandten Rand in einer schräg angeschnittenen Abschlußkante (43) ausläuft, und daß die Schräge (45) der Abschlußkante (43) bei geschlossener Kassette mit ganzer Länge auf einem gerundeten oder mit einer Fase versehenen Übergang (20) aufliegt, der an einer langgestreckten Griffleiste (9) der Platte (3) angeordnet ist, wobei an dem Übergang (20) die im wesentlichen in Verlängerung der Deckelwand (8) angeordnete Griffleiste (9) in einen langgestreckten Verbindungsabschnitt (19) übergeht, der die Griffleiste (9) mit der Platte (3) verbindet.

18. Kassette nach einem der vorangehenden Ansprüche, dadurch gekennzeichnet, daß mindestens vier Hauptkanten des Gehäuses mit Viertelkreis-Rundungen (44) versehen sind.

## Claims

1. Cassette for holding at least one disc with information with a high character density stored on it or to be stored on it (compact disc),
comprising a case, which is composed of a base part (1) and a lid part (2) which can pivot with respect to said base part (1), as well as a panel (3) which can be inserted into the case and is provided with retaining elements (4) for the disc (13),
in which case the base part (1) has a rectangular base (5) which is provided with side walls (31) along its mutually opposite side rims,
in which case the lid part (2) has a rectangular lid wall (8) which extends parallel to the base (5), bounds a rectangular free area (15) for holding information material (16), for example an accompanying text, at the top, and is provided with side walls (32) along its mutually opposite side rims,
and in which case the essentially rectangular panel (3) has widened regions (25) at the side in those two regions in which, when a disc (13) is inserted, its circumference comes closest to the side rims, which widened regions (25) are provided, at least on one side of the panel (3), with a reinforcement rim which extends along the outer edge of the widened region (25),
characterized
in that the two reinforcement rims form supporting walls (26) between which the information material (16) can be inserted, and in that both supporting walls (26) extend so far upwards in the direction of the lid part (2) that their upper edges (28) overhang the inserted disc (13) and centre the information material (16) between them.

2. Cassette according to Claim 1, characterized in that the side walls (31) of the base part (1) have cutouts (33) into which the widened regions at the side (25) project when the case is closed.

3. Cassette according to Claim 1 or Claim 2, characterized in that the side walls (32) of the lid part (2) have cutouts (34) into which the widened regions (25) at the side as well as the supporting walls (26) mounted on them project when the case is closed.

4. Cassette according to one of the preceding claims, characterized in that the side wall (32) of the lid part (2) is located outside the majority of the side wall (31) of the base part (1), and in that the inside (36) of the supporting wall (26) is located at the same level or within the inside of the side wall (32) of the lid part (2) and, at the same time, outside the inside of the side wall (31) of the base part (1).

5. Cassette according to one of the preceding claims, characterized in that the outside (35) of the supporting wall (26) ends flush with the side wall of the case.

6. Cassette according to one of the preceding claims, characterized in that those corners of the supporting wall (26) which face the lid part (2) are rounded.

7. Cassette according to one of the preceding claims, characterized in that the panel (3) is provided with a centrally arranged supporting element (14), which passes through a centre hole in the inserted disc (13) and, above the disc (13), forms a central rest (30) for supporting a handbook (16), information leaflet etc. which can be inserted between the panel (13) and the lid wall (8).

8. Cassette according to Claim 7, characterized in that the retaining elements (4) for the disc (13) are arranged on the central supporting element (14).

9. Cassette according to Claim 8, characterized in that the retaining elements (4) are sprung tongues arranged in the form of a crown.

10. Cassette according to one of Claims 7 to 9, characterized in that the panel (3) is provided with vertical side end rims (23) which run roughly as an extension to and offset parallel inwards with respect to the supporting wall (26), and whose height is equal to the height of the central rest (30).

11. Cassette according to one of Claims 7 to 10, characterized in that, in the region of the two transverse rims which extend transversely with respect to the side rims, the panel (3) is provided with short ribs (29) which project towards the panel centre and whose height is equal to the height of the central rest (30).

12. Cassette according to one of the preceding claims, characterized in that retaining elements (4) are located on both sides of the panel (3), and each hold one disc (13) on each side of the panel (3).

13. Cassette according to Claim 12, characterized in that the panel (3) is arranged in the base part (1) such that it can pivot by means of two hinge pins (11), preferably with a pivoting angle of about 180°.

14. Cassette according to Claim 13, characterized in that the capability to pivot between the lid part (2) and the base part (1) on the one hand, and between the panel (3) and the base part (1) on the other hand, is provided by hinge pins (10) and (11), respectively, which are located at opposite ends of the side walls (31) of the base part (1).

15. Cassette according to one of the preceding claims, characterized in that the hinge pins (10) which ensure the capability to pivot between the lid part (2) and the base part (1) each comprise a pivot pin (38), which is immediately adjacent to the side wall (32) of the lid part (2), as well as a radial widened region (39) which is integrally connected to it, in which case the side wall (31) of the base part (1) is provided with a two-step hole (40) which is matched to the pivot pin (38) and to the widened region (39), and in which case the pivot pin (38) and the widened region (39) are located entirely within the material thickness of the side wall (31) of the base part.

16. Cassette according to one of the preceding claims, characterized in that the pivot axis (42) between the lid part (2) and the base part (1) is located higher than the mid-point of the height of the case, and in that, when the cassette is completely open, the lid part (2) is supported by the transverse-running end edge (43) of the lid wall (8) on the closed transverse wall (6) of the base part (1), above its base (5).

17. Cassette according to one of the preceding claims, characterized in that, on its rim which faces the pivot axis (42) between the lid part (2) and the base part (1), the lid wall (8) of the lid part (2) ends in an end edge (43) which is cut obliquely, and in that, when the cassette is closed, the entire length of the incline (45) of the end edge (43) rests on an intermediate region (20), which is rounded or is provided with a chamfer and is arranged on an elongated grip strip (9) of the panel (3), in which case, at the intermediate region (20), the grip strip (9) (which is arranged essentially as an extension of the lid wall (8)) merges into an elongated connecting section (19), which connects the grip strip (9) to the planel (3).

18. Cassette according to one of the preceding claims, characterized in that at least four main edges of the case are provided with quarter-circle rounded regions (44).

## Revendications

1. Cassette destinée à recevoir au moins un disque sur lequel sont mémorisées ou sont à mémoriser des informations à haute densité d'enregistrement (compact disc),
constituée d'un boîtier composé d'un élément de base (1) et d'un élément de couvercle (2) pouvant pivoter par rapport à celui-ci, ainsi que d'une platine (3) pouvant être insérée dans le boîtier, qui est munie d'éléments de retenue (4) pour le disque (13),
l'élément de base (1) comportant un fond (5) rectangulaire qui est muni de parois latérales (31) le long de ses bords latéraux opposés,
l'élément de couvercle (2) comportant une paroi (8) de couvercle rectangulaire s'étendant parallèlement au fond (5), qui délimite vers le haut un espace libre (15) rectangulaire destiné à recevoir du matériel d'information (16), tel que par exemple un texte d'accompagnement, et qui est munie de parois latérales (32) le long de ses bords latéraux opposés, et
la platine (3) de forme sensiblement rectangulaire comportant des élargissements latéraux (25) dans les deux zones dans lesquelles la circonférence du disque (13) à l'état inséré est située à proximité des bords latéraux, lesquels sont munis, au moins d'un côté de la platine (3), d'un bord de renforcement s'étendant le long du bord extérieur de l'élargissement (25),
caractérisée en ce que
les deux bords de renforcement forment des parois de maintien (26) entre lesquelles peut être inséré le matériel d'information (16), et en ce que les deux parois de maintien (26) s'étendent vers le haut en direction de l'élément de couvercle (2) de telle sorte qu'elles dépassent par leurs bords supérieurs (28) au-dessus du disque (13) inséré et centrent le matériel d'information (16) entre elles.

2. Cassette selon la revendication 1, caractérisée en ce que les parois latérales (31) de l'élément de base (1) comportent des découpes (33) dans lesquelles s'engagent les élargissements latéraux (25) à l'état fermé du boîtier.

3. Cassette selon la revendication 1 ou 2, caractérisée en ce que les parois latérales (32) de l'élément de couvercle (2) comportent des découpes (34) dans lesquelles les élargissements latéraux (25), ainsi que les parois de maintien (26) qu'ils portent, s'engagent à l'état fermé du boîtier.

4. Cassette selon l'une quelconque des revendications précédentes, caractérisée en ce que la paroi latérale (32) de l'élément de couvercle (2) est située en dehors de la majeure partie de la paroi latérale (31) de l'élément de base (1), et en ce que la face intérieure (36) de la paroi de maintien (26) est située dans le même plan que ou du côté intérieur de la face intérieure de la paroi latérale (32) de l'élément de couvercle (2), et simultanément à l'extérieur de la face intérieure de la paroi latérale (31) de l'élément de base (1).

5. Cassette selon l'une quelconque des revendications précédentes, caractérisée en ce que la face extérieure (35) de la paroi de maintien (26) se termine au même niveau que la paroi latérale du boîtier.

6. Cassette selon l'une quelconque des revendications précédentes, caractérisée en ce que les angles de la paroi de maintien (26) orientés vers l'élément de couvercle (2) sont arrondis.

7. Cassette selon l'une quelconque des revendications précédentes, caractérisée en ce que la platine (3) est munie d'un élément de maintien (14) disposé de façon centrale, qui passe par un orifice central du disque (13) inséré, et qui forme au-dessus du disque (13) un appui central (30) destiné à maintenir un manuel (16), un texte d'information etc. pouvant être inséré entre la platine (13) et la paroi (8) de couvercle.

8. Cassette selon la revendication 7, caractérisée en ce que les éléments de retenue (4) pour le disque (13) sont disposés sur l'élément de maintien central (14).

9. Cassette selon la revendication 8, caractérisée en ce que les éléments de retenue (4) sont des languettes élastiques disposées en forme de couronne.

10. Cassette selon l'une des revendications 7 à 9, caractérisée en ce que la platine (3) est munie de bords de finition latéraux surélevés (23), qui s'étendent sensiblement dans le prolongement de la paroi de maintien (26) et en étant décalés parallèlement vers l'intérieur, et dont la hauteur est identique à la hauteur de l'appui central (30).

11. Cassette selon l'une des revendications 7 à 10, caractérisée en ce que, dans la zone des deux bords transversaux s'étendant transversalement aux bords latéraux, la platine (3) est munie de courtes nervures (29) qui font saillie en direction du milieu de la platine (3), dont la hauteur est identique à la hauteur de l'appui central (30).

12. Cassette selon l'une quelconque des revendications précédentes, caractérisée en ce que des éléments de retenue (4) sont prévus sur les deux faces de la platine (3) afin de pouvoir recevoir un disque (13) sur chaque face de la platine (3).

13. Cassette selon la revendication 12, caractérisée en ce que la platine (3) est disposée au moyen de deux pivots d'articulation (11) de façon à pouvoir pivoter dans l'élément de base (1), de préférence avec un angle de pivotement de l'ordre de 180°.

14. Cassette selon la revendication 13, caractérisée en ce que la possibilité de pivotement entre l'élément de couvercle (2) et l'élément de base (1) d'une part, et entre la platine (3) et l'élément de base (1) d'autre part, est assurée par l'intermédiaire de pivots d'articulation (10) ou (11) qui sont situés sur des extrémités opposées des parois latérales (31) de l'élément de base (1).

15. Cassette selon l'une quelconque des revendications précédentes, caractérisée en ce que les pivots d'articulation (10) assurant la possibilité de pivotement entre l'élément de couvercle (2) et l'élément de base (1) sont constitués d'un pivot (38) directement adjacent à la paroi latérale (32) de l'élément de couvercle (2), ainsi que d'un élargissement radial (39) s'y raccordant d'un seul tenant, la paroi latérale (31) de l'élément de base (1) étant pourvue d'un perçage (40) à deux paliers adapté au pivot (38) ainsi qu'à l'élargissement (39), et le pivot (38) et l'élargissement (39) étant entièrement intégrés dans l'épaisseur du matériau de la paroi latérale (31) de l'élément de base.

16. Cassette selon l'une quelconque des revendications précédentes, caractérisée en ce que l'axe de rotation (42) entre l'élément de couvercle (2) et l'élément de base (1) est situé au-dessus de la moitié de la hauteur du boîtier, et en ce que, à l'état entièrement ouvert de la cassette, l'élément de couvercle (2) prend appui sur la paroi transversale (6) fermée de l'élément de base (1) au-dessus du fond (5) de ce dernier par l'intermédiaire du bord de finition (43) transversal de la paroi (8) de couvercle.

17. Cassette selon l'une quelconque des revendications précédentes, caractérisée en ce que, au niveau de son bord orienté en direction de l'axe de rotation (42) entre l'élément de couvercle (2) et l'élément de base (1), la paroi (8) de l'élément de couvercle (2) se termine par un bord de finition (43) découpé en biseau, et en ce qu'à l'état fermé de la cassette, le biseau (45) du bord de finition (43) s'applique sur toute sa longueur sur une transition (20) arrondie ou munie d'un chanfrein, qui est disposée sur une barrette de préhension allongée (9) de la platine (3), la barrette de préhension (9) disposée sensiblement dans le prolongement de la paroi (8) de couvercle se transformant au niveau de la transition (20) en une section de liaison allongée (19) qui relie la barrette de préhension (9) à la platine (3).

18. Cassette selon l'une quelconque des revendications précédentes, caractérisée en ce qu'au moins quatre bords principaux du boîtier sont munis d'arrondis en forme de quart de cercle (44).
